# EUROPEAN PATENT SPECIFICATION

(11) **EP 0 509 157 B1**
(45) Date of publication and mention of the grant of the patent: **09.08.1995**
(21) Application number: 91303096.1
(22) Date of filing: 09.04.1991
(51) Int. Cl.: F16B 21/18, F16L 37/08, E21B 23/02, E21B 17/10

(54) **Retainer ring**
Haltering
Anneau de retenue

(43) Date of publication of application: 21.10.1992
(73) Proprietor: Cooper Cameron Corporation, Houston, Texas 77027 (US)
(72) Inventor: Thornburrow, Edward Thomas, Leeds LS7 3DR (GB)
(74) Representative: Jackson, Peter Arthur

(56) References cited:
- CH-A- 275 904
- DE-C- 801 353
- GB-A- 2 109 031
- GB-A- 2 193 540
- US-A- 4 751 965

## Description

This invention relates to a retainer ring for use in retaining a generally tubular member within a generally cylindrical bore. The retainer ring has particular application to the retention of a wear bushing within a wellhead system, although its use is by no means limited to such an application.

During drilling operations which occur in the formation of well bores it is the practice to insert wear bushings within the wellhead system in order to protect the bore of the wellhead system from damage during such operations. The walls of the bore in the wellhead system typically have one or more circumferential grooves which are used to support equipment in the well bore. Wear bushings conventionally employ retainer rings which engage such grooves to retain the wear bushing within the bore. A common type of retaining ring used in the retention of wear bushings is an elastomer ring. Such rings are employed since quite commonly with wall thicknesses of the order of ½ inch it is not possible to use latches or other mechanical devices in the limited space available. However, elastomer rings have not proved to be entirely satisfactory since the retention force which they can generate is limited. The present invention is concerned with an improved form of retaining ring which can be used in retaining a tubular member within a bore where the space for the retention ring is relatively restricted.

CH-A-275904 discloses a retainer ring for use in retaining a generally tubular member within a generally cylindrical bore comprising a split-ring like member having a radially extending portion or portions which define(s) a shoulder for engaging a groove in the wall of the bore, the ring being of non-uniform diameter such that it exhibits a wave-like form in the circumferential direction of the ring; and, according to the present invention, such a ring is characterised in that the outer periphery of the ring also defines a shallow taper extending from an end face of the ring to assist insertion of the tubular member and ring into the cylindrical bore; and in that the shoulder, which faces in the opposite axial direction to the taper, is inclined to the ring axis.

The waveform may be of very shallow amplitude and be generally sinusoidal. The peaks of the waveform may be distributed equi-angularly around the ring. The ring, for example, may include eight lobes uniformly distributed around the ring.

The shoulder is preferably inclined at approximately 45° to the ring axis.

The retainer ring may be for retaining a wear bushing in a wellhead system.

It has been found that the wave-like form of the present ring is capable of producing a significant retaining force when the ring engages the groove in the wall of the cylindrical bore.

The invention will be described now by way of example only, with particular reference to the accompanying drawings. In the drawings:
Figure 1 is a sectional view showing a wear bushing located within the cylindrical bore of a wellhead system;
Figure 2 is a plan view of a retaining ring in accordance with the present invention, and
Figure 3 is a section on the line III-III of Figure 2.

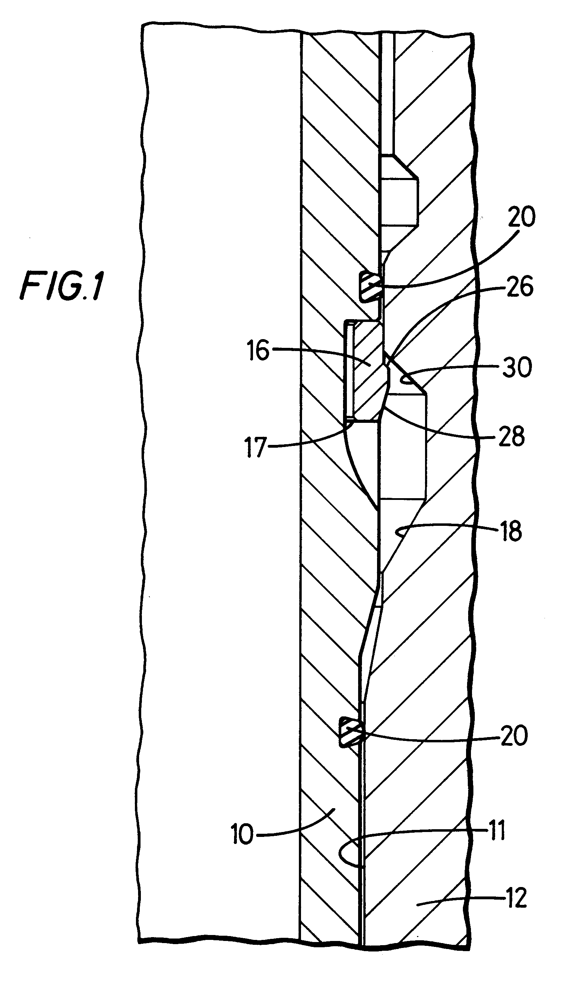

Referring to Figure 1 there is shown a generally tubular wear bushing 10 which is disposed within the generally cylindrical bore 11 of a wellhead system 12. The wear bushing as will be apparent to those skilled in the art is located in the bore of the wellhead system in order to protect the wall of that bore during the passage of, for example, drilling equipment into the well bore.

The wear bushing 10 is retained in the bore by means of a retainer ring 16 which is disposed within a circumferential groove 17 formed in the outer wall of the wear bushing. The retainer ring 16 engages a groove 18 in the wall of the cylindrical bore to retain the wear bushing within the bore. Seals 20 are provided on opposite sides of the retainer ring and provide a seal between the bushing and the wall of the bore 11.

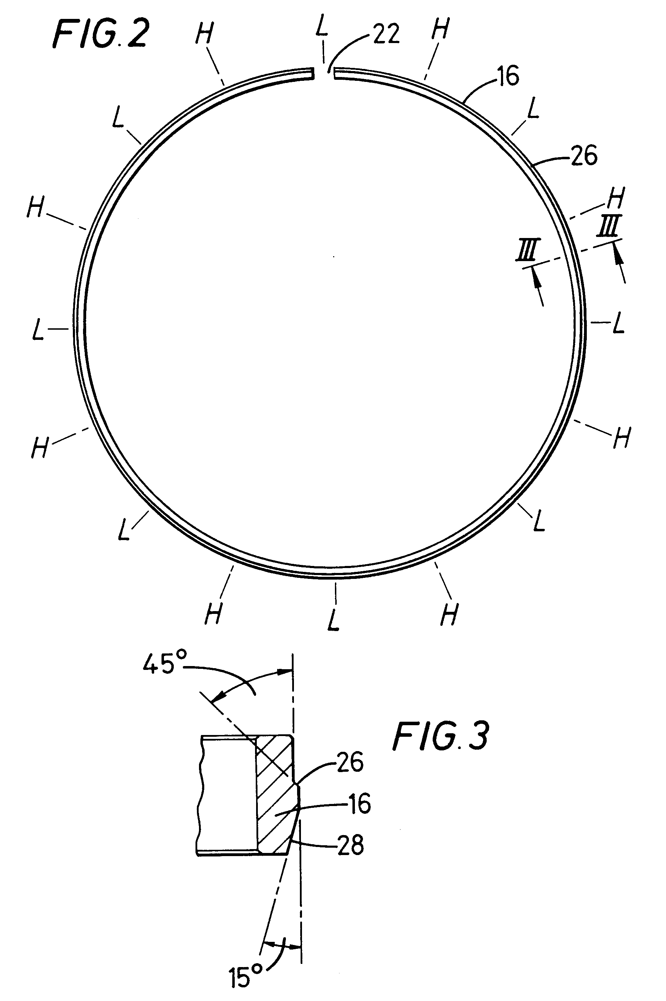

Referring to Figure 2 of the drawings, the retainer ring is of the split ring type. The ring is split at 22, the gap between the ends being typically ½ inch. As shown in Figure 2 of the drawings the retainer ring is of non-uniform diameter and exhibits a wave-like form in the circumferential direction of the ring. This waveform is very shallow and generally sinusoidal. The high points are being indicated at H and the low points at L. It has been found that this configuration substantially increases the retention force which can be provided by the retaining ring. In the form of the ring shown in Figure 2 there are eight wavelengths distributed equiangularly around the circumference of the ring so that typically there is an angular spacing of 45° between successive high points H on the ring. It will be appreciated with reference to Figure 1 of the drawings that it is principally in the region of the high points that engagement occurs between the ring and the groove in the bore wall. The section of Figure 1 is taken through a high point on the ring.

Referring now to Figure 3 it will be seen that the outer surface of the ring is formed with a radially projecting part which defines a shoulder 26 which extends at approximately 45° to the axis of the ring. The projecting part also defines a shallow tapering surface 28 which extends at approximately 15° to the axis of the ring.

The material from which the ring is constructed is not critical and typically can be a low alloy steel.

To install the wear bushing in the wellhead bore the retainer ring is initially located in the groove 17 formed in the outer periphery of the wear bushing. The wear bushing is then inserted into the cylindrical bore and movement of the retaining ring into the bore is assisted by the shallow taper 28 formed on the outer periphery of the ring. When the retainer ring reaches the axial location of the groove 18 formed in the wall of the cylindrical bore 11 it springs outwardly so that the shoulder 26 can engage the inclined wall 30 of the groove 18 and hence resist removal of the wear bushing from the wellhead. It will be appreciated that it is principally at the high points around the circumference of the ring that engagement occurs between the shoulder 26 and the wall of the groove 18.

The wear bushing can be removed by application of significant upward force to the wear bushing using suitable equipment located at, for example, a drilling platform. It has been found that the present ring can be retrieved from a wear bushing and used many times over without any significant wear occurring to the ring.

It will be appreciated that whilst the retainer ring has been described specifically in relation to the retention of a wear bushing within a well bore the ring has much wider application generally to the retention of a tubular member within a generally cylindrical bore.

## Claims

1. A retainer ring for use in retaining a generally tubular member (10) within a generally cylindrical bore (11) comprising a split-ring like member (16) having a radially extending portion or portions (H) which define(s) a shoulder (26) for engaging a groove (18) in the wall of the bore, the ring being of non-uniform diameter such that it exhibits a generally wave-like form in the circumferential direction of the ring; characterised in that the outer periphery of the ring also defines a shallow taper (28) extending from an end face of the ring to assist insertion of the tubular member and ring into the cylindrical bore; and in that the shoulder (26), which faces in the opposite axial direction to the taper, is inclined to the ring axis.

2. A retainer ring according to claim 1, wherein the waveform is of very shallow amplitude and is generally sinusoidal.

3. A retainer ring according to claim 1 or claim 2, wherein the peaks (H) of the waveform are distributed equiangularly around the ring.

4. A retainer ring according to any one of the preceding claims, wherein the shoulder (26) is inclined at approximately 45° to the ring axis.

5. A wear bushing (10) including a retainer ring (16) according to any one of the preceding claims disposed in a circumferential groove (17) in the bushing.

## Patentansprüche

1. Haltering zum Halten eines im wesentlichen rohrförmigen Körpers (10) in einer im wesentlichen zylindrischen Bohrung (11), umfassend ein spaltringartiges Bauelement (16) mit einem radial nach außen stehendem Teil bzw. mehreren Teilen (H), welche(s) eine Schulter (26) zum Eingriff in eine Nut (18) in der Wand der Bohrung bildet (bilden), wobei der Ring einen uneinheitlichen Durchmesser aufweist, so daß er sich im wesentlichen wellenförmig in peripherer Richtung des Ringes nach außen erstreckt, **dadurch gekennzeichnet**, daß die äußere Peripherie des Ringes außerdem eine leichte Abschrägung (28) aufweist, die sich an einer Endfläche des Ringes befindet, um das Einführen des rohrförmigen Körpers und des Ringes in die zylindrische Bohrung zu erleichtern; und daß die Schulter (26), welche axial in die zur Abschrägung entgegengesetzte Richtung weist, zur Ringachse hin geneigt ist.

2. Haltering nach Anspruch 1, **dadurch gekennzeichnet**, daß die Wellenform eine sehr flache Amplitude aufweist und im wesentlichen sinusförmig ist.

3. Haltering nach den Ansprüchen 1 und 2, **dadurch gekennzeichnet**, daß die Wellenberge (H) in gleichen Winkelabständen um den Ring verteilt sind.

4. Haltering nach einem oder mehreren der vorhergehenden Ansprüche, **dadurch gekennzeichnet**, daß die Schulter (26) um etwa 45° zur Ringachse geneigt ist.

5. Verschleißbuchse (10) mit einem Haltering (16) nach einem oder mehreren der vorhergehenden Ansprüche, **dadurch gekennzeichnet**, daß dieser in einer am Umfang der Buchse befindlichen Nut (17) angeordnet ist.

## Revendications

1. Anneau d'organe de retenue destiné à être utilisé pour la retenue d'un organe (10) de forme générale tubulaire dans un trou (11) de forme générale cylindrique, comprenant un organe (16) analogue à un anneau fendu ayant une ou plusieurs parties (H) disposées radialement et qui délimitent un épaulement (26) destiné à être au contact d'une gorge (18) de la paroi du trou, l'anneau ayant un diamètre non uniforme si bien qu'il présente une forme analogue à une ondulation de façon générale dans la direction circonférentielle de l'anneau, caractérisé en ce que la périphérie externe de l'anneau délimite aussi une partie tronconique peu profonde (28) partant d'une face d'extrémité de l'anneau et destinée à faciliter l'introduction de l'organe tubulaire et de l'anneau dans le trou cylindrique, et en ce que l'épaulement (26) tourné dans la direction axiale opposée à la partie tronconique est incliné vers l'axe de l'anneau.

2. Anneau d'organe de retenue selon la revendication 1, dans lequel la forme de l'ondulation a une très faible amplitude et est sinusoïdale de façon générale.

3. Anneau d'organe de retenue selon la revendication 1 ou 2, dans lequel les crêtes (H) de la forme d'onde sont distribuées à des intervalles angulaires égaux autour de l'anneau.

4. Anneau d'organe de retenue selon l'une quelconque des revendications précédentes, dans lequel l'épaulement (26) est incliné d'un angle d'environ 45° vers l'axe de l'anneau.

5. Manchon d'usure (10) comprenant un anneau (16) d'organe de retenue selon l'une quelconque des revendications précédentes, placé dans une gorge circonférentielle (17) formée dans le manchon.
